Europäisches Patentamt

(19) **European Patent Office**

**Office européen des brevets**

(11) Numéro de publication: **0 038 775**

**A2**

(12) # DEMANDE DE BREVET EUROPEEN

(21) Numéro de dépôt: **81810132.1**

(22) Date de dépôt: **06.04.81**

(51) Int. Cl.³: **F 16 D 55/02**
F 16 D 65/12, F 16 D 65/02
F 16 D 69/00

(30) Priorité: **23.04.80 CH 3128/80**
**22.05.80 FR 8011646**

(43) Date de publication de la demande:
**28.10.81 Bulletin 81/43**

(84) Etats contractants désignés:
**AT DE GB IT**

(71) Demandeur: **Sinterwerke Grenchen AG**
**Niklaus Wengi-Strasse 10**
**CH-2540 Grenchen(CH)**

(72) Inventeur: **Irion, Ulrich**
**Rebenweg**
**CH-2545 Selzach(CH)**

(72) Inventeur: **Würth, Ralph**
**Schulstrasse 5**
**CH-2540 Grenchen(CH)**

(54) **Frein à disque pour véhicule et procédé de fabrication d'un disque de frein.**

(57) L'invention est relative à un frein à disque pour véhicule et au procédé de fabrication d'un disque de frein.

Le frein à disque selon l'invention comprend un disque de frein mobile entre les mâchoires de serrage d'un étrier, les mâchoires comportent chacune une garniture de freinage. Le disque de frein comporte sur chaque face de frottement un revêtement de métal fritté (11). L'arrangement constitué par les garnitures de freinage et les mâchoires de serrage présente une conductibilité thermique inférieure à la conductibilité thermique du revêtement.

Application aux freins d'automobilies ou d'avions.

EP 0 038 775 A2

./...

FIG. 1

# Frein à disque pour véhicule et procédé de fabrication d'un disque de frein.

La présente invention est relative à un frein à disque pour véhicule.

Les freins à disque pour véhicule comportent habituellement au moins un disque de frein mobile entre les mâchoires de serrage d'au moins un étrier. Chaque mâchoire de serrage comporte chacune une garniture de freinage. Le plus souvent, le disque est par exemple constitué par de la fonte d'acier ou par de l'acier tourné et meulé. Les garnitures de freinage sont constituées sous forme de plaquettes obtenues par compression de fibres organiques et d'un liant, les fibres organiques étant, le plus souvent, des fibres d'amiante, matériau recherché, dans cette utilisation, pour ses propriétés mécaniques de friction et de tenue en température. Cependant la présence du liant, notamment, ne permet pas de conserver les propriétés mécaniques de friction de ce type de plaquette, lors de l'usage dans des conditions sévères de ce type de frein et de l'échauffement des surfaces de friction en contact, une diminution de l'efficacité du freinage apparaissant notamment lors de l'échauffement du disque.

Le remplacement de ce type de garniture par des garnitures de métal fritté permet d'atténuer cette diminution de l'efficacité du freinage , la tenue en température de ce type de garnitures lors d'utilisation dans des conditions sévères étant grandement améliorée. Cependant la haute conductibilité thermique de ce type de garniture provoque, dans des conditions sévères d'utilisation et d'échauffement du disque, un échauffement inconsidéré des étriers de frein et corrélativement l'échauffement correspondant des circuits hydrauliques et du liquide de commande hydraulique, des chutes de pression du liquide pouvant alors, notamment pour des équipements de véhicules de compétition, entraîner une diminution dangereuse de l'efficacité du freinage.

Des garnitures de freinage aux surfaces de friction en graphite ont été décrites dans la demande de brevet DAS 27 26 741 en République Fédérale d'Allemagne du 14.6.77. De telles surfaces de friction ne permettent pas cependant une isolation thermique suffisante des organes de commande du freinage et leur usure sur des disques traditionnels en acier reste importante du fait de la faiblesse relative du coefficient de dureté du graphite 0,5 à 1 selon l'échelle MOHS.

Le frein à disque selon l'invention permet de remédier aux inconvénients précités.

Un objet de la présente invention est la mise en oeuvre d'un type de frein à disque d'une sûreté de fonctionnement absolue quelles que soient les conditions d'utilisation.

Un autre objet de la présente invention est la mise en oeuvre d'un type de frein à disque dans lequel les causes de pollution de l'environnement par des poussières d'amiante, réputées hautement cancérogènes, sont supprimées.

Un autre objet de la présente invention est la mise en oeuvre d'un type de frein à disque de faible coût de mise en oeuvre et d'entretien.

Le frein à disque selon l'invention est caractérisé par un disque de frein comportant sur chaque face de frottement un revêtement de métal fritté. L'arrangement constitué par les garnitures de freinage et les mâchoires de serrage des étriers présentent une conductibilité thermique inférieure à la conductibilité thermique du revêtement.

Un frein à disque d'un tel type peut notamment être utilisé sur tout véhicule dans lequel la vitesse angulaire de rotation de l'arbre support du disque à freiner est élevée, jusqu'à 5 à 6000 tours par minutes, l'énergie cinétique du véhicule en mouvement à dégrader en chaleur pouvant être élevée comme par exemple dans le cas d'avions en atterrissage ou de véhicules automobiles.

L'invention sera mieux comprise à l'aide de la description et des dessins ci-après où les mêmes références représentent les mêmes éléments et dans lesquels

la figure 1 représente un frein à disque selon l'invention,

la figure 2 représente un mode de réalisation non limitatif du disque de frein selon l'invention.

la figure 3 représente une variante de réalisation du disque, représenté figure 2,

la figure 4 représente une autre variante de réalisation du disque de frein représenté figure 2,

les figures 5 a et 5 b représentent un mode de réalisation particulier non limitatif des garnitures du frein à disque selon l'invention,

les figures 6a à 6c et 7a à 7d et 7e représentent schématiquement les différentes étapes de procédé de mise en oeuvre d'un disque de frein conformément à l'invention.

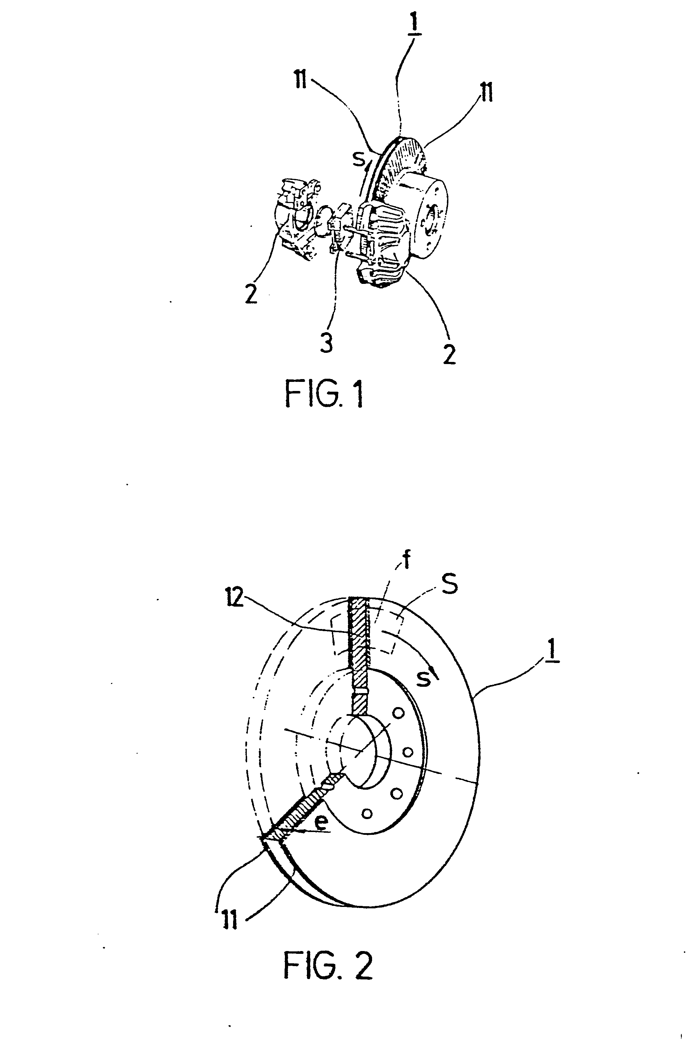

Selon la figure 1, le frein à disque selon l'invention comporte au moins un disque de frein 1 mobile entre les mâchoires de serrage 2 formant un étrier. Les mâchoires 2 comportent chacune une garniture de freinage 3. Tout mode de réalisation comportant une pluralité de disques notamment en vue du freinage de grandes masses en mouvement ne sort pas du cadre de la présente invention. Le disque de frein conformément à l'invention comporte sur chaque face de frottement un revêtement de métal fritté 11. L'arrangement constitué par les garnitures de freinage 3 et les mâchoires de serrage 2 présente une conductibilité thermique $WL_G$ inférieure à la conductibilité thermique $WL_R$ du revêtement, $WL_G < WL_R$. A titre d'exemple non limitatif le revêtement de métal fritté peut être constitué par un revêtement constitué d'un mélange de poudres métalliques comportant essentiellement du bronze ou du cuivre auquel est ajouté de la poudre de silice (quartz). Compte tenu des qualités du revêtement de métal fritté à obtenir, la porosité du revêtement est comprise entre 20% et 5%. Le coefficient de frottement statique $M_S$ des garnitures de freinage sur le revêtement est compris entre 0,1 et 0,70 et le facteur de qualité $\eta$ rapport des coefficients de frottement dynamique Md au coefficient de frottement statique Ms, $n = \dfrac{Md}{Ms}$ est de l'ordre de 0,8.

Selon un mode de réalisation non limitatif représenté figure 2, le revêtement est constitué par une couronne circulaire de métal fritté. A titre d'exemple le disque support 12 est par exemple un disque en fonte d'acier obtenu par coulage ou au contraire un disque en acier façonné par usinage par enlèvement de copeaux. Chaque face de frottement du disque est recouverte par une couronne de matériau fritté 11 d'épaisseur e au moins égale à 0,1 mm, par exemple. Le revêtement 11 peut être directement fritté sur le disque support 12 ainsi qu'il sera expliqué de manière plus détaillée ci-après.

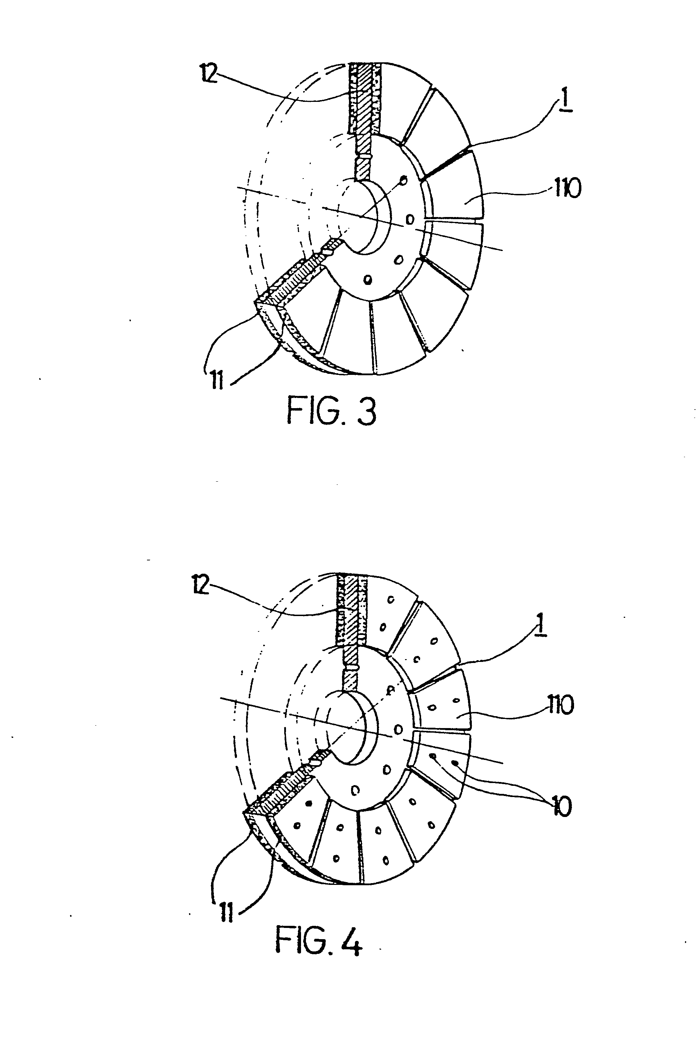

Selon une autre variante de réalisation représentée figure 3, le revêtement de métal fritté est constitué par un arrangement de plaquettes disjointes 110 en matériau fritté. Le matériau constituant les plaquettes a la composition définie précédemment. Chaque plaquette 110 a la for-

- 5 -                                    0038775

me d'un secteur de couronne circulaire en rapport avec les dimensions de construction du disque support 12.

Les plaquettes 110 de matériau fritté sont par exemple fixées au disque support 12 par collage à l'aide d'une colle résistant à l'échauffement du disque au cours du freinage. De préférence les plaquettes 110 de matériau fritté sont fixées au disque support 12 par frittage afin d'assurer par une adhésion métal sur métal une bonne qualité du point de vue de la conductibilité thermique de l'ensemble disque support 12 revêtement 11.

Ainsi que représenté figure 4, les plaquettes 110 de matériau fritté peuvent également être fixées au disque à l'aide de rivets 10, permettant également d'assurer une bonne qualité du contact thermique disque support 12 revêtement 11.

Le fonctionnement du dispositif est le suivant:

lors de la commande du freinage par serrage, les mâchoires et frottement des garnitures sur le disque, l'énergie cinétique des pièces en mouvement est dégradée en chaleur. Du fait que l'arrangement constitué par les garnitures de freinage et l'étrier a une conductibilité thermique inférieure à la conductibilité thermique du revêtement, l'énergie calorifique dégagée par le frottement est dissipée préférentiellement dans ce revêtement, une partie étant transmise, par contact, au disque support 12. Le disque et principalement le revêtement 11 sont le siège d'un échauffement, l'énergie calorifique se répartissant du fait de la conductivité thermique du revêtement sur toute la circonférence du revêtement, l'élévation de température pour un point d'abscisse curviligne s du revêtement par rapport au centre de la zone de frottement f étant sensiblement décroissante. L'énergie calorifique répartie dans le revêtement bon con-

ducteur de la chaleur est alors absorbée sur toute la périphérie du revêtement par convection de l'air ambiant du fait de la rotation du disque. Ainsi au cours d'essais comparatifs de disques de frein selon l'invention comportant un revêtement de métal fritté, et de disque de freins
de dimensions analogues constituées par le seul disque support en acier
venu de fonderie, on a pu constater une réduction de l'élévation de température moyenne des disques dans un rapport voisin de 2 pour des conditions d'utilisation sensiblement identiques. Préférentiellement le revêtement est constituée par de la poudre de métal fritté ou un mélange de
ces poudres, le revêtement final présentant une conductibilité thermique
comprise entre 2,3 et 3,9 Watts $cm^{-1}$ x $^{o}k^{-1}$.

Selon une caractéristique du frein à disque selon l'invention, la
surface de friction S , surface de contact entre le revêtement du disque et la garniture du frein, peut, du fait de la conductibilité thermique élevée du revêtement du disque, être augmentée dans un rapport 10 par
rapport aux dispositifs classiques pour une élévation de température comparable voisine de $300^{o}$ C. Il en résulte corrélativement une efficacité
de freinage particulièrement accrue pour un coefficient d'usure des garnitures de frein sensiblement diminué. Ainsi des garnitures de frein pour
automobile particulière présentant le plus souvent une surface de friction de l'ordre de 20 $cm^{2}$ peuvent sans difficulté être remplacées par
des garnitures de surface de friction de 200 $cm^{2}$ pour une utilisation du
frein et du disque de frein conformément à l'invention dans des conditions de température analogues.

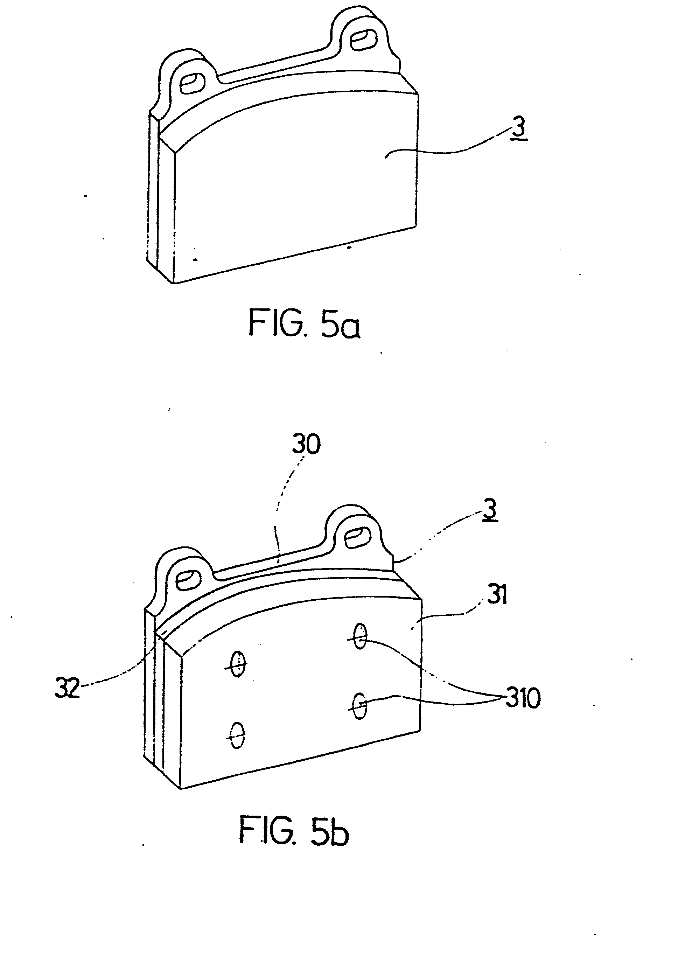

Selon le mode de réalisation représenté figure 5a et 5b, les garnitures de frein 3 présentent un coefficient de frottement statique Ms sur le
revêtement compris entre 0,1 et 0,70. Ainsi les garnitures de frein 3 ainsi que représenté figure 5 a peuvent être constituées par de la fonte grise ou par de la fonte d'acier, les valeurs du coefficient de frottement du revêtement 11 sur ce matériau précédemment citées convenant à cet effet. Dans ce cas, les garnitures de freinage sont constituées par une pièce unique formée par coulage ainsi que représenté figure 5a. Le coefficient de conductibilité thermique de la fonte grise ou de la fonte d'acier est, par exemple, égal au $\frac{1}{5}$ du coefficient de conductibilité thermique du revêtement décrit précédemment comportant environ 60% de cuivre.

Selon le mode de réalisation de la figure 5b, les garnitures de frein 3 sont constituées par une pièce support 30 et une plaquette de freinage ou de friction 31 fixée à la pièce support 30. Bien entendu la plaquette de friction 31 est par exemple constituée par de la fonte grise ou de la fonte d'acier. Tout mode de réalisation des garnitures de frein dans lequel un matériau, autre que la fonte grise ou la fonte d'acier est utilisé, matériau présentant avec le revêtement un coefficient de frottement statique compris entre 0,1 et 0,7 sensiblement, ne sort pas du cadre de la présente invention.

Les matériaux constitutifs des garnitures de frein, fonte grise ou fonte d'acier par exemple, ont été choisis compte tenu de leur coefficient de frottement avec le revêtement considéré et compte tenu de leur prix de revient modique, ces matériaux au cours du frottement dû au freinage, s'usant plus rapidement que le revêtement de métal fritté du disque lui-même permettant une diminution de l'usure du disque lui-même dans un rapport 9.

Afin de diminuer l'usure des garnitures de frein elles-mêmes, la garniture elle-même, formée d'une seule pièce ou la plaquette de friction 31, comporte une zone superficielle de friction de dureté voisine de 6 à 7 selon l'échelle MOHS. Cette zone de friction de matériau dur peut par exemple être obtenue par nitruration de la surface de frottement de la garniture ou de la plaquette de friction. Une telle zone de matériau dur permet de diminuer notablement l'usure des garnitures de frein pour un accroissement minime de l'usure du revêtement du disque compte tenu de l'augmentation importante de la surface de frottement par rapport aux dispositifs classiques. En tout état de cause d'usure importante du revêtement de métal fritté, ce revêtement peut être remplacé sans difficultés le disque support étant intact.

De préférence ainsi que représenté figure 5b, les garnitures de freinage comportent en outre intercalée entre la pièce support 30 et la plaquette de freinage 31 une couche d'isolation thermique 32. Cette couche d'isolation thermique 32 peut être constituée par exemple par un matériau céramique, une couche de mica ou une plaquette d'amiante. L'ensemble ainsi constitué présente une conductibilité thermique notablement inférieure au $\frac{1}{10}$ de la conductibilité thermique du revêtement de métal fritté par exemple.

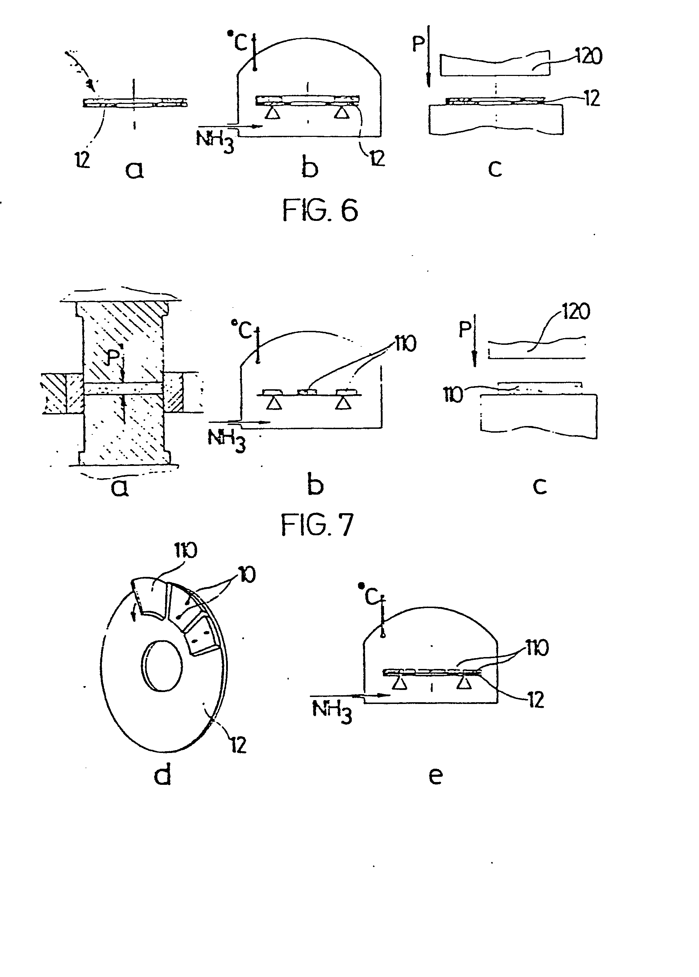

La figure 6a, b, c représente les différentes étapes d'un procédé de fabrication du disque de frein selon l'invention. La poudre ou le mélange de poudre métallique est répandu selon une couche sensiblement uniforme sur le disque support 12 selon une épaisseur déterminée. Un frittage en atmosphère réductrice est effectué ainsi que représenté en b la couche de poudre et le disque support 12 étant portés à une température pouvant varier entre 800° C et 1400° C selon la composition du mélange des poudres. Le frittage est effectué par exemple dans une atmosphère

d'amoniac craqué, $2NH3 \rightleftharpoons N_2 + 3H_2$, ou d'un mélange air propane à pression de l'ordre de 1,5 atmosphère. Le frittage permet d'obtenir sur la face du disque considérée un revêtement adhérant au disque support 12 formant une couche continue de friction. Dans la phase représenté en figure 6c, la couche de friction, comportant une surface libre irrégulière après frittage, est pressée à l'aide d'un outil 120 d'une presse hydraulique, l'outil 120 ayant une face de pressage plane. La couche de friction est pressée avec une pression P comprise entre 2 et 10 tonnes par $cm^2$. Cette phase de pressage permet, d'une part, une uniformisation de la surface libre de la couche de friction de manière à former une surface de friction sensiblement parallèle à la face correspondante du disque support 12 et, d'autre part, compte tenu du choix de la valeur de la pression P, d'obtenir un revêtement de métal fritté constituant la couche de friction de porosité déterminée comprise entre 25% et 5 % et de dureté correspondante comprise par exemple entre 1,5 et 2,6 selon l'échelle MOHS. Bien entendu le procédé précédemment décrit est ensuite mis en oeuvre pour l'autre face du disque.

Le procédé selon l'invention peut également être mis en oeuvre, ainsi que représenté figure 7a à 7e, de manière à former, par frittage, à partir d'une matrice correspondant à un secteur de couronne circulaire du disque support 12, une pluralité de plaquettes 110 de matériau métallique fritté. Les plaquettes 110 sont frittées en atmosphère réductrice ainsi que décrit précédemment. Préalablement au frittage représenté en figure b, la poudre métallique répandue en a dans la matrice est soumise à un pressage à une pression P' comprise entre 2 t et 6 t par $cm^2$ de manière à former pour chaque plaquette une ébauche de compact. Les ébauches de compact sont ensuite frittées dans les conditions précédemment décrites.

Après frittage les plaquettes 110 sont soumises ainsi que représenté figure 7c à un pressage secondaire à une pression P comprise entre 2 et 10 tonnes par cm$^2$. Ce pressage secondaire permet une remise en forme des plaquettes en raison d'éventuelles déformations dues au frittage, défaut de planéité, et, si nécessaire, une modification de la porosité et de la dureté correspondante de ces plaquettes. Les plaquettes 110 sont ensuite fixées au disque support 12 soit par rivetage deux à deux ainsi que représenté figure 7d, soit par frittage ainsi que représenté figure 7e.

Afin d'obtenir un revêtement 11, constituant la couche de friction du disque, de porosité minimale et donc de dureté se rapprochant des caractéristiques de dureté des métaux coulés, les plaquettes 110, ou éventuellement les couches continues de revêtement 11, pouvant être comprimées à une pression permettant d'obtenir une porosité de l'ordre de 15%, peuvent également ensuite être imprégnées avec un métal ou un alliage de métaux à point de fusion relativement bas, tel que par exemple le cuivre et ses alliages. Après diffusion du métal ou de l'alliage on obtient un revêtement 11 de friction dont les propriétés sont celles d'un alliage demi-dur courant de dureté comprise entre 6 et 7 selon l'échelle MOHS.

De telles duretés peuvent être obtenues notamment à partir d'un alliage de cuivre tel que par exemple, cuivre - beryllium, le beryllium présentant un point de fusion de 1278°C ou d'un alliage cuivre - nickel, le nickel présentant un point de fusion de 1453°C et un coefficient de dureté de 5 selon l'échelle MOHS.

Les alliages utilisés présentent de préférence un point de fusion compris entre 750°C et 1450°C. Dans le cas des alliages cuivre-beryllium ou cuivre-nickel, le coefficient de conductibilité thermique d'un alliage comportant de l'ordre de 20 à 30% de ces métaux,beryllium et/ou nickel,est suffisant, compte tenu des valeurs respectives des coefficients de conductibilité thermique correspondants de ces métaux, pour assurer une bonne dissipation de la chaleur dégagée par le freinage.

Ce revêtement garde de bonnes propriétés mécaniques quelles que soient les conditions d'utilisation et peut supporter des températures de l'ordre de 500°C sans altération des valeurs des coefficients de frottement et de la qualité du freinage.

Les procédés ainsi décrits permettent la mise en oeuvre de disques de frein présentant une bonne résistance à l'usure et aux contraintes mécaniques de dilatation dues à l'échauffement du disque au cours du freinage, la différence de conductibilité thermique entre le revêtement de matériau fritté et le disque support, qui peut être atténuée par le choix de la composition du revêtement pour un coefficient de frottement donné, pouvant être tenue pour négligeable au niveau du développement de ces contraintes pour des disques usuels dans lesquels l'épaisseur du disque support est au moins de 5 à 6 millimètres.

REVENDICATIONS

1. Frein à disque pour véhicule comprenant au moins un disque de frein mobile entre les mâchoires de serrage d'au moins un étrier, lesdites mâchoires comportant chacune une garniture de freinage, caractérisé en ce que ledit disque de frein comporte sur chaque face de frottement un revêtement de métal fritté, l'arrangement constitué par les garnitures de freinage et les mâchoires de serrage présentant une conductibilité thermique inférieure à la conductibilité thermique dudit revêtement.

2. Frein à disque selon la revendication 1, caractérisé en ce que ledit revêtement est constitué par une couronne circulaire de métal fritté, le coefficient de frottement statique des garnitures de freinage sur le revêtement étant compris entre 0.1 et 0.70.

3. Frein à disque selon la revendication 1, caractérisé en ce que ledit revêtement est constitué par un arrangement de plaquettes disjointes en matériau fritté chaque plaquette ayant la forme d'un secteur de couronne circulaire.

4. Frein à disque selon la revendication 3, caractérisé en ce que lesdites plaquettes sont fixé au disque par frittage.

5. Frein à disque selon la revendication 1, caractérisé en ce que les garnitures de freinage sont constituées par de la fonte d'acier.

6. Frein à disque selon la revendication 1, caractérisé en ce que les garnitures de freinage sont constituées par de la fonte grise.

7. Frein à disque selon la revendication 5 ou 6 caractérisé en ce que les garnitures de freinage comportent en surface une zone de friction en matériau dur.

8. Frein à disque selon l'une des revendications 5 à 7, caractérisé en ce que les garnitures de freinage sont constituées par une pièce unique formée par coulage.

9. Frein à disque selon l'une des revendications 6 ou 7, caractérisé en ce que les garnitures de freinage sont constituées chacune par une pièce support et une plaquette de freinage fixée à la pièce support.

10. Frein à disque selon la revendication 9, caractérisé en ce que les garnitures de freinage comportent en outre, intercalée entre la pièce support et la plaquette de freinage, une couche d'isolation thermique.

11. Frein à disque selon l'une des revendications 1 à 3, caractérisé en ce que le disque de frein comporte sur chaque face de freinage un revêtement de métal fritté imprégné avec un matériau d'un des types de métal ou alliage de métaux à point de fusion compris entre 750°C et 1450°C.

12. Procédé de fabrication d'un disque de frein consistant successivement pour chaque face plane du disque à:

- répandre une couche sensiblement uniforme de matériau métallique pulvérulent sur une épaisseur déterminée,

- effectuer un frittage à température constante de la couche de matériau métallique pulvérulent de manière à former sur la face du disque considérée un revêtement adhérent au disque formant une couche continue de friction,

- presser avec une pression comprise entre 2 et 10 t/cm$^2$ ladite couche de friction de manière à former une surface de friction sensiblement parallèle à la face correspondante du disque.

**0038775**

13. Procédé de fabrication d'un disque de frein, caractérisé en ce qu'il consiste à:

- former dans une matrice de dimensions correspondant à un secteur de couronne circulaire du disque considéré par frittage de matériau pulvérulent une pluralité de plaquettes de matériau métallique fritté,

- disposer et fixer ces plaquettes en forme de secteur de couronne circulaire sur chaque face du disque de frein de manière à former une couche de friction, chaque plaquette étant séparée de la suivante, selon une direction radiale du disque, par un intervalle identique sensiblement constant, les plaquettes de matériau métallique fritté étant directement fixées au disque par frittage.

FIG. 1

FIG. 2

FIG. 3

FIG. 4

FIG. 5a

FIG. 5b

FIG. 6

FIG. 7